# EUROPÄISCHE PATENTSCHRIFT

(11) **EP 0 776 948 B1**
(45) Veröffentlichungstag und Bekanntmachung des Hinweises auf die Patenterteilung: **01.08.2001**
(21) Anmeldenummer: 96810780.5
(22) Anmeldetag: 13.11.1996
(51) Int. Cl.: C09B 67/00, C09B 29/42, D06P 1/18

(54) **Mischungen von Monoazopyridonfarbstoffen**
Mixtures of pyridone monoazo dyestuffs
Mélanges de colorants de monoazopyridone

(30) Priorität: 22.11.1995 CH 330595
(43) Veröffentlichungstag der Anmeldung: 04.06.1997
(73) Patentinhaber: Ciba Specialty Chemicals Holding Inc., 4057 Basel (CH)
(72) Erfinder: Schaetzer, Jürgen, 79618 Rheinfelden (DE)

(56) Entgegenhaltungen:
- EP-A- 0 085 823
- EP-A- 0 378 167
- EP-A- 0 440 072
- EP-A- 0 441 166
- EP-A- 0 641 837

## Beschreibung

Die vorliegende Erfindung betrifft Mischungen von Monoazopyridonfarbstoffen, ihre Herstellung und ihre Verwendung zum Färben oder Bedrucken von textilen Fasermaterialien.

Monoazopyridonfarbstoffe und ihre Verwendung zum Färben von synthetischen Fasermaterialien sind z.B. aus EP-A-0 440 072 bekannt. Mischungen zweier Pyridonazofarbstoffe sind in EP-A-0 378 167 beschrieben. Es hat sich jedoch gezeigt, dass diese Farbstoffe den höchsten Ansprüchen, nicht immer vollauf genügen. Es besteht daher Bedarf nach neuen Farbstoffen oder Farbstoffkombinationen, welche insbesondere bessere Auszug-, Aufbau- oder Waschechtheiteigenschaften zeigen.

Es wurde nun überraschenderweise gefunden, dass die erfindungsgemässen Mischungen in hohem Masse auf die Faser aufziehen, sich durch einen sehr guten Aufbau auszeichnen und die resultierten Färbungen gute Licht-, Sublimier- und Waschechtheiten aufweisen.

Gegenstand der vorliegenden Erfindung ist somit eine Farbstoffmischung enthaltend:
A) einen Farbstoff der Formel 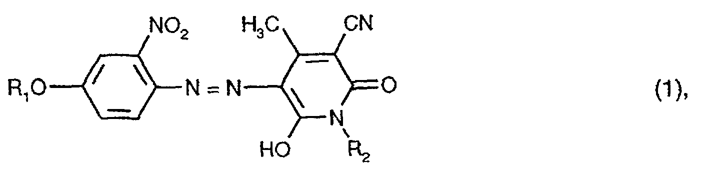 worin
   R₁ C₁-C₄-Alkyl, R₂ den Rest (CH₂)ₙO-R₅, R₅ unabhängig von R₁ C₁-C₄-Alkyl, und n eine Zahl 1, 2 oder 3 bedeuten,
   und
B) einen Farbstoff der Formel 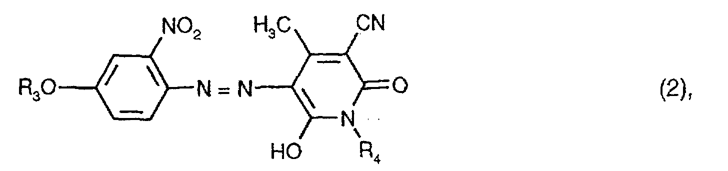 worin
   R₃ und R₄ voneinander unabhängig C₁-C₄-Alkyl bedeuten.

C₁-C₄-Alkyl in den Formeln (1) und (2) bedeutet Methyl, Ethyl, lsopropyl, n-Propyl, Isobutyl, n-Butyl, sec. Butyl oder tert. Butyl.

Bevorzugt sind Farbstoffmischungen enthaltend Farbstoffe der Formel (1), worin R₁ Methyl ist. Bevorzugt sind weiter Farbstoffmischungen enthaltend Farbstoffe der Formel (1), worin R₅ Methyl, Ethyl oder Isopropyl ist.

Ebenso bevorzugt sind Farbstoffmischungen enthaltend Farbstoffe der Formel (2), worin R₃ Methyl ist. Bevorzugt sind weiter Farbstoffmischungen enthaltend Farbstoffe der Formel (2), worin R₄ Methyl oder Ethyl-ist.

Besonders bevorzugt sind Farbstoffmischungen enthaltend Farbstoffe der Formel (1), worin R₁ Methyl, R₅ Methyl, Ethyl oder Isopropyl und n 2 oder 3 sind.

Ebenso besonders bevorzugt sind Farbstoffmischungen enthaltend Farbstoffe der Formel (2), worin R₃ Methyl und R₄ Methyl oder Ethyl sind.

Ganz besonders bevorzugt sind Farbstoffmischungen enthaltend Farbstoffe der Formel (1), worin R₁ Methyl, R₅ Methyl, Ethyl oder Isopropyl, und n 2 oder 3 sind und Farbstoffe der Formel (2), worin R₃ Methyl, und R₄ Methyl oder Ethyl sind.

Das Verhältnis der Farbstoffe (A) und (B) in den erfindungsgemässen Farbstoffmischungen kann in einem breiten Rahmen variieren z.B. von 5:1 bis zu 1:5. Bevorzugt werden Farbstoffmischungen, welche ein Verhältnis der Farbstoffe (A) und (B) von 3:1 bis 1:3 aufweisen. Besonders bevorzugt sind Farbstoffmischungen, welche die Farbstoffe (A) und (B) im Verhältnis von 1:1 enthalten.

Besonders bevorzugt sind folgende in der Tabelle 1 aufgeführten Farbstoffmischungen der Farbstoffe (A) der Formel (1) und (B) der Formel (2):

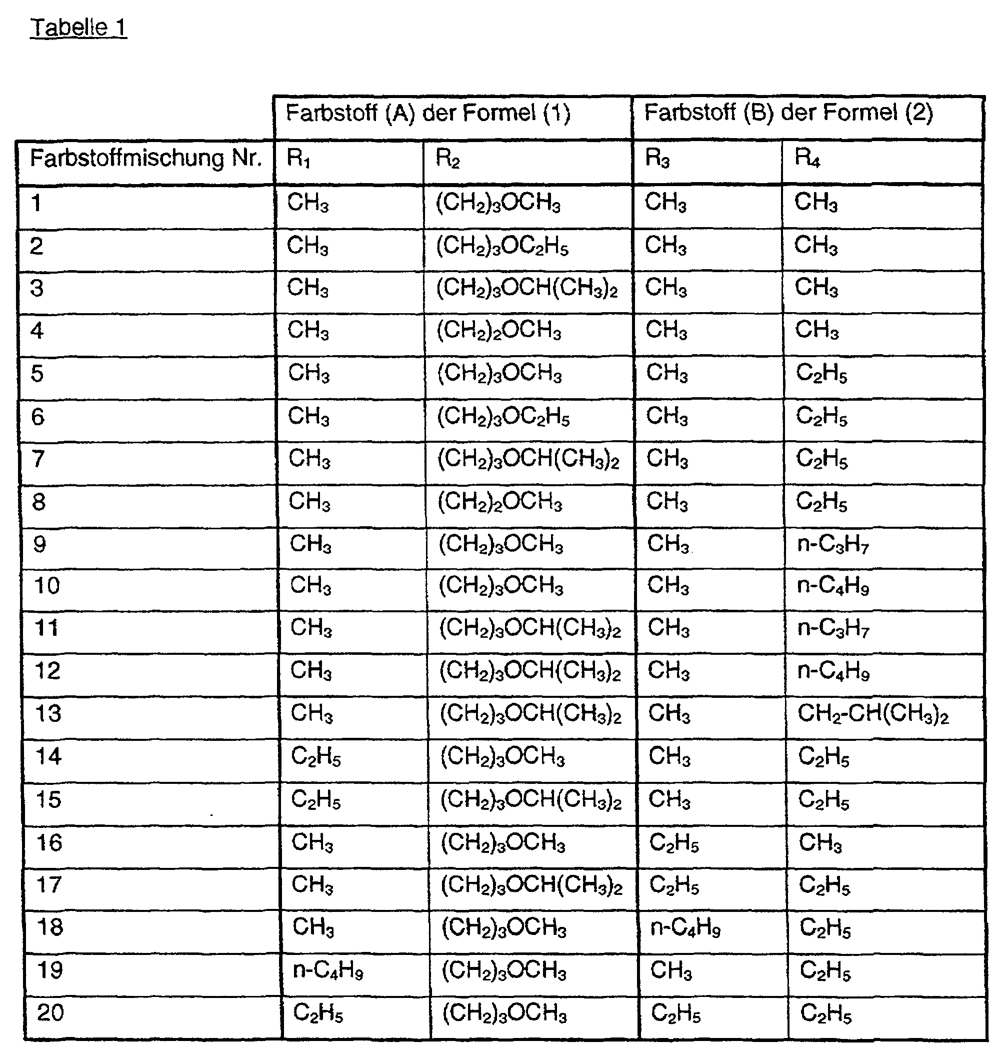

Gegenstand der vorliegenden Erfindung ist weiter ein Verfahren zur Herstellung der Farbstoffmischungen enthaltend die Farbstoffe der Formeln (1) und (2). Die erfindungsgemässen Mischungen können z.B. so hergestellt werden, dass man die Farbstoffe der Formeln (1) und (2) im gewünschten Verhältnis miteinander vermischt, oder dass man eine Diazokomponente der Formel 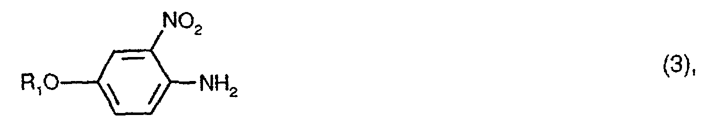 worin R₁ C₁-C₄-Alkyl bedeutet, diazotiert und auf eine Mischung von zwei Kupplungskomponenten der Formeln 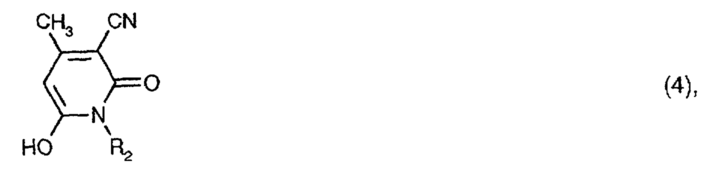 worin R₂ die in der Formel (1) angegebene Bedeutung hat, und 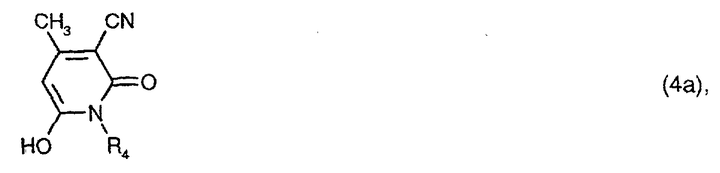 worin R₄ die in der Formel (2) angegebene Bedeutung hat, kuppelt.

Die erfindungsgemässen Farbstoffmischungen, welche die Farbstoffe der Formeln (1) und (2) enthalten, können zum Färben und Bedrucken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen Farbstoffmischungen gefärbt oder bedruckt werden.

Als halbsynthetische Textilmaterialien kommen vor allem Cellulose 2½-Acetat und Cellulosetriacetat in Frage.

Synthetische hydrophobe Textilmaterialien bestehen vor allem aus linearen, aromatischen Polyestem, beispielsweise solchen aus Terephthalsäure und Glykolen, besonders Ethylenglykol oder Kondensationsprodukten aus Terephthalsäure und 1,4-Bis-(hydroxymethyl)cyclohexan; aus Polycarbonaten, z.B. solchen aus α,α-Dimethyl-4,4'-dihydroxy-diphenylmethan und Phosgen, aus Fasem auf Polyvinylchlorid- sowie Polyamid-Basis.

Die Applikation der erfindungsgemässen Farbstoffmischungen auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nichtionischen Dispergiermitteln und gegebenenfalls üblichen Quellmitteln (Carrier) bei Temperaturen zwischen 80 und 140°C. Cellulose-2½-acetat färbt man vorzugsweise zwischen ungefähr 65 bis 85°C und Cellulosetriacetat bei Temperaturen bis zu 115° C.

Die erfindungsgemässen Farbstoffmischungen färben im Färbebad gleichzeitig anwesende Wolle und Baumwolle nicht oder nur wenig an (sehr gute Reserve), so dass sie auch gut zum Färben von Polyester/Wolle- und Polyester/Cellulosefaser-Mischgeweben verwendet werden können.

Die erfindungsgemässen Farbstoffmischungen eignen sich zum Färben nach dem Thermosol-Verfahren, im Ausziehverfahren und für Druckverfahren. Das Ausziehverfahren ist bevorzugt. Das Flottenverhältnis ist von den apparativen Gegebenheiten, vom Substrat und der Aufmachungsform abhängig. Es kann jedoch innerhalb eines weiten Bereiches gewählt werden, z.B. 1:4 bis 1:100, liegt aber vorzugsweise zwischen 1:6 bis 1:25.

Das genannte Textilmaterial kann dabei in den verschiedenen Verarbeitungsformen vorliegen, wie z.B. als Faser, Faden oder Vlies, als Gewebe oder Gewirke.

Es ist vorteilhaft, die erfindungsgemässen Farbstoffmischungen vor ihrer Verwendung in ein Farbstoffpräparat zu überführen. Hierzu wird die Farbstoffmischung vermahlen, so dass seine Teilchengrösse im Mittel zwischen 0,1 und 10 Mikron beträgt. Das Vermahlen kann in Gegenwart von Dispergiermitteln erfolgen. Beispielsweise wird die getrocknete Farbstoffmischung mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser Druckpasten und Färbebäder herstellen.

Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristallgummi, Johannisbrotkemmehl, Tragant, Carboxymethylcellulose, Hydroxyethylcellulose, Stärke oder synthetische Produkte, beispielsweise Polyacrylamide, Polyacrylsäure oder deren Copolymere, oder Polyvinylalkohole.

Die erfindungsgemässen Farbstoffmischungen verleihen den genannten Materialien, vor allem dem Polyestermaterial, egale gelbe oder goldgelbe Farbtöne von sehr guten Gebrauchs-Echtheiten, wie vor allem guter Lichtechtheit und guter Sublimierechtheit. Hervorzuheben ist die sehr gute Waschechtheit. Die erfindungsgemässen Farbstoffe zeichnen sich ferner durch einen guten Auszug und Aufbau aus.

Die erfindungsgemässen Farbstoffmischungen können auch gut verwendet werden zur Herstellung von Mischnuancen zusammen mit anderen Farbstoffen oder zusammen mit einem geeigneten roten und blauen Farbstoff für das Trichromie-Färben.

Die vorstehend genannten Verwendungen der erfindungsgemässen Farbstoffmischungen stellt ebenso einen Gegenstand der vorliegenden Erfindung dar wie ein Verfahren zum Färben oder Bedrucken von halbsynthetischem oder synthetischem hydrophobem Fasermaterial, insbesondere Textilmaterial, das darin besteht die erfindungsgemässe Farbstoffmischung auf das genannte Material aufzubringen oder es in dieses einzuarbeiten. Das genannte hydrophobe Fasermaterial ist vorzugsweise textiles Polyestermaterial. Weitere Substrate, die durch das erfindungsgemässe Verfahren behandelt werden können sowie bevorzugte Verfahrensbedingungen sind vorstehend bei der näheren Erläuterung der Verwendung der erfindungsgemässen Farbstoffmischungen zu finden.

Ein weiterer Gegenstand der Erfindung ist das durch das genannte Verfahren gefärbte bzw. bedruckte hydrophobe Fasermaterial, vorzugsweise Polyester-Textilmaterial.

Die nachfolgenden Beispiele dienen der Veranschaulichung der Erfindung. Darin sind, sofern nicht anders angegeben, die Teile Gewichtsteile und die Prozente Gewichtsprozente. Die Temperaturen sind in Celsiusgraden angegeben. Die Beziehung zwischen Gewichtsteilen und Volumenteilen ist dieselbe wie zwischen Gramm und Kubikzentimeter.

### Beispiel 1

Eine Suspension von 33,6 Teilen 2-Nitro-4-methoxyanilin in 220 Teilen Wasser wird auf ca. 10 - 15° C abgekühlt und mit 60 Teilen 32 %-iger Salzsäure tropfenweise versetzt. Anschliessend werden innert 15 Minuten unter gutem Rühren 55 Teile einer 4N Natriumnitritlösung zugegeben, wobei die Temperatur der Reaktionsmischung bei ca. 15° C gehalten wird. Nach beendeter Zugabe wird noch 1 Stunde nachgerührt und der Nitritüberschuss mit wenig Amidosulfonsäure zerstört. Das resultierte Diazotierungsgemisch lässt man langsam in eine auf ca. 5 - 10° C gekühlte Lösung von 20,7 Teilen N-Ethyl-3-cyan-4-methyl-5-hydroxypyridon, 24,3 Teilen N-lsopropoxypropyl-3-cyan-4-methyl-5-hydroxypyridon und 16,3 Teilen einer 30%-igen wässrigen Natriumhydroxidlösung in 200 Teilen Wasser einfliessen. Während der Zugabe des Diazotierungsgemisches wird der pH-Wert mit einer 30%-igen wässrigen Natriumhydroxidlösung konstant zwischen 5 und 6 gehalten. Die orangerote Suspension wird noch ca. 1 Stunde bei 15 - 20° C nachgerührt. Der Niederschlag wird abgesaugt, mit Wasser nachgewaschen und bei 70° C im Vakuum getrocknet. Man erhält 78,4 Teile der Farbstoffmischung Nr.7. Die Farbstoffmischung färbt Polyester in brillanten goldgelben Tönen mit guten Echtheiten, insbesondere mit sehr guten Waschechtheiten.

### Beispiel 2

Analog zu dem im Beispiel 1 beschriebenen Verfahren oder durch Mischen von zwei Farbstoffen der Formeln (1) und (2) erhält man die vorrangig in der Tabelle 1 aufgeführten Farbstoffmischungen 1 - 6, und 8 - 20, welche ebenfalls Polyester in brillanten goldgelben Tönen mit guten Echtheiten, insbesondere sehr guten Waschechtheiten färben.

### Beispiel 3

100 g Polyestergewebe werden bei einem Flottenverhältnis von 1:20 in eine Flotte, enthaltend
1 g der Farbstoffmischung Nr. 7,
1 g/l Ammoniumsulfat und
0,5 g/l eines handelsüblichen Egalisiermittels,
welche mit 80%-iger Ameisensäure auf pH-Wert von 4,5 - 5 eingestellt ist, bei Raumtemperatur eingetaucht. Die Flotte wird dann zuerst mit einer Aufheizrate von 3° C/Minute auf 60° C und anschliessend mit einer Aufheizrate von 2° C/Minute auf 130° C aufgeheizt. Bei 130° C wird 60 Minuten gefärbt. Anschliessend wird die Flotte auf 40° C abgekühlt, das gefärbte Polyestergewebe mit Wasser gewaschen und in einem Bad, enthaltend 5 ml/l 30%-iger Natriumhydroxidlösung, 2 g/l 85%-iger Natriumdithionitlösung und 1 g/l eines handelsüblichen Waschmittels während 20 Minuten bei 70 - 80° C reduktiv gereinigt. Anschliessend wird die fertiggestellte Färbung mit Wasser gewaschen und getrocknet. Man erhält eine brillante goldgelbe Färbung mit ausgezeichneten Waschechtheiten.

## Patentansprüche

1. Farbstoffmischung enthaltend:
A) einen Farbstoff der Formel 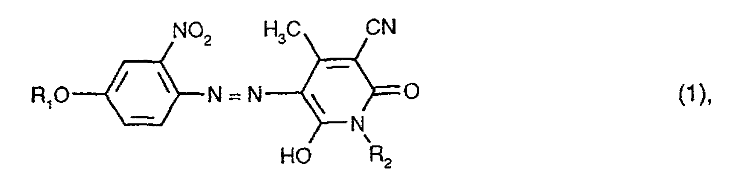 worin
R₁ C₁-C₄-Alkyl, R₂ den Rest (CH₂)ₙO-R₅, R₅ unabhängig von R₁ C₁-C₄-Alkyl und n eine Zahl 1, 2 oder 3 bedeuten, und
B) einen Farbstoff der Formel 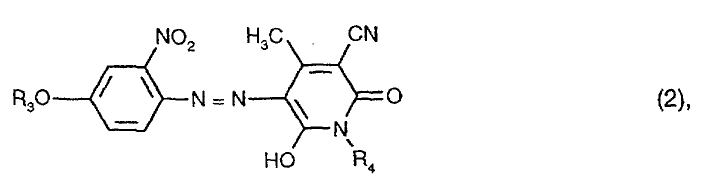
worin R₃ und R₄ voneinander unabhängig C₁-C₄-Alkyl bedeuten.

2. Farbstoffmischung gemäss Anspruch 1, worin R₁ Methyl ist.

3. Farbstoffmischung gemäss Anspruch 1 oder 2, worin R₄ Methyl oder Ethyl ist.

4. Farbstoffmischung gemäss einem der Ansprüche 1 bis 3, worin R₃ Methyl ist.

5. Farbstoffmischung gemäss einem der Ansprüche 1 bis 4, worin R₅ Methyl, Ethyl oder Isopropyl bedeutet.

6. Farbstoffmischung gemäss Anspruch 1, worin R₁ und R₃ Methyl, R₄ Methyl oder Ethyl, R₅ Methyl, Ethyl oder Isopropyl und n 2 oder 3 bedeuten.

7. Farbstoffmischung gemäss einem der Ansprüche 1 bis 6, dadurch gekennzeichnet, dass das Verhältnis der Farbstoffe der Formel (1) und (2) von 3:1 bis 1:3 liegt.

8. Verfahren zur Herstellung der Farbstoffmischungen gemäss Anspruch 1, dadurch gekennzeichnet, dass man eine Diazokomponente der Formel 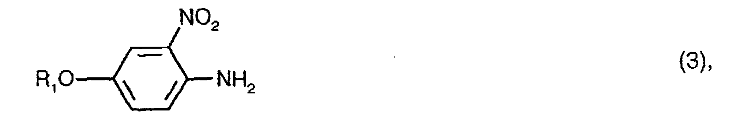 worin R₁ C₁-C₄-Alkyl bedeutet, diazotiert und auf eine Mischung von zwei Kupplungskomponenten der Formeln 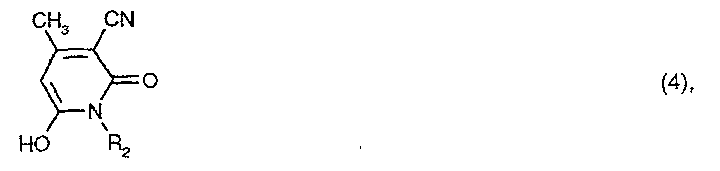 worin R₂ den Rest (CH₂)ₙO-R₅, R₅ C₁-C₄-Alkyl und n eine Zahl 1, 2 oder 3 bedeuten, und 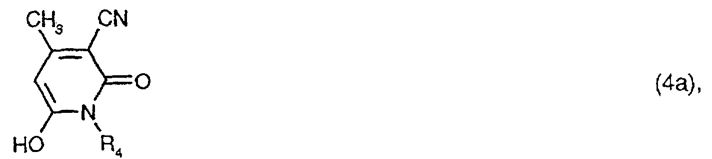 worin R₄ C₁-C₄-Alkyl bedeutet, kuppelt.

9. Verwendung der Farbstoffmischung gemäss Anspruch 1 zum Färben oder Bedrucken von halbsynthetischem oder synthetischem hydrophobem Fasermaterial, insbesondere Textilmaterial.

10. Verfahren zum Färben oder Bedrucken von halbsynthetischem oder synthetischem hydrophobem Fasermaterial, insbesondere Textilmaterial, dadurch gekennzeichnet, dass man die Farbstoffmischung gemäss Anspruch 1 auf das genannte Material aufbringt oder es in dieses einarbeitet.

11. Das gemäss Anspruch 10 gefärbte bzw. bedruckte hydrophobe Fasermaterial, vorzugsweise Polyester-Textilmaterial.

## Claims

1. A dye mixture comprising:
A) a dye of the formula 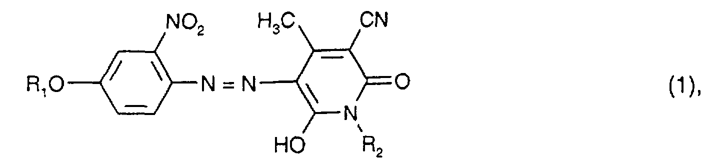 in which
R₁ is C₁-C₄alkyl,
R₂ is the radical (CH₂)ₙO-R₅,
R₅, independently of R₁, is C₁-C₄alkyl and
n is the number 1, 2 or 3
and
B) a dye of the formula 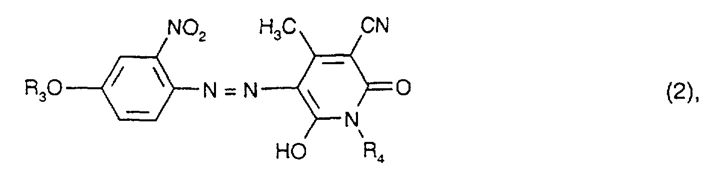 in which
R₃ and R₄ independently of one another are C₁-C₄alkyl.

2. A dye mixture according to claim 1, in which R₁ is methyl.

3. A dye mixture according to claim 1 or 2, in which R₄ is methyl or ethyl.

4. A dye mixture according to any one of claims 1 to 3, in which R₃ is methyl.

5. A dye mixture according to any one of claims 1 to 4, in which R₅ is methyl, ethyl or isopropyl.

6. A dye mixture according to claim 1, in which R₁ and R₃ are methyl, R₄ is methyl or ethyl, R₅ is methyl, ethyl or isopropyl and n is 2 or 3.

7. A dye mixture according to any one of claims 1 to 6, in which the ratio of the dyes of the formula (1) and (2) is 3:1 to 1:3.

8. A process for the preparation of a dye mixture according to claim 1, which comprises diazotizing a diazo component of the formula 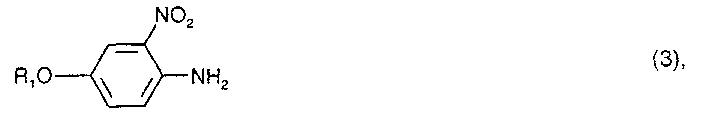 in which R₁ is C₁-C₄alkyl,
and coupling the product to a mixture of two coupling components of the formulae 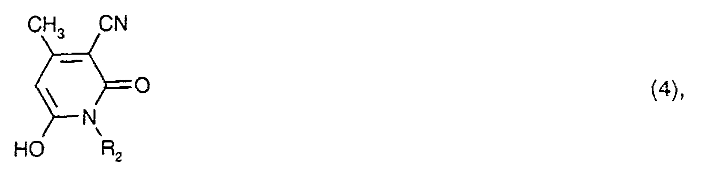 in which R₂ is the radical (CH₂)ₙO-R₅,
R₅ is C₁-C₄alkyl and
n is the number 1, 2 or 3, and 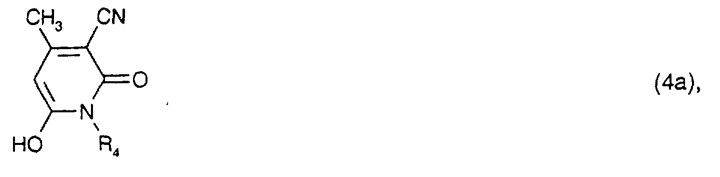 in which R₄ is C₁-C₄alkyl.

9. The use of a dye mixture according to claim 1 for dyeing or printing semi-synthetic or synthetic hydrophobic fibre material, in particular textile material.

10. A process for dyeing or printing semi-synthetic or synthetic hydrophobic fibre material, in particular textile material, which comprises applying a dye mixture according to claim 1 to the material mentioned or incorporating it into this.

11. A hydrophobic fibre material, preferably polyester textile material, dyed or printed according to claim 10.

## Revendications

1. Mélange de colorants contenant :
A) Un colorant de formule 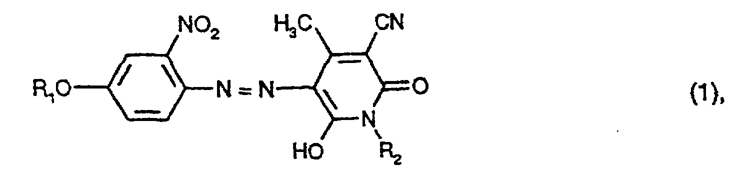 dans laquelle
R₁ est un groupe alkyle en C₁ à C₄, R₂ le résidu (CH₂)ₙO-R₅, R₅ représente indépendamment de R₁ un groupe alkyle en C₁ à C₄ et n est le nombre 1, 2 ou 3,
et
B) un colorant de formule 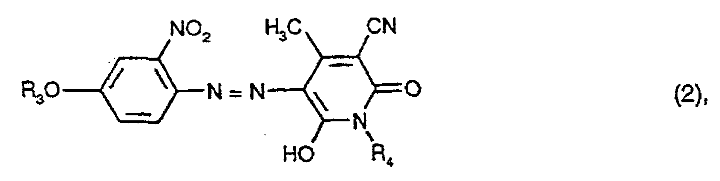 dans laquelle
R₃ et R₄ représentent indépendamment l'un de l'autre un groupe alkyle en C₁ à C₄.

2. Mélange de colorants selon la revendication 1, dans lequel R₁ est le méthyle.

3. Mélange de colorants selon la revendication 1 ou 2, dans lequel R₄ est le méthyle ou l'éthyle.

4. Mélange de colorants selon l'une des revendications 1 à 3, dans lequel R₃ est le méthyle.

5. Mélange de colorants selon l'une des revendications 1 à 4, dans lequel R₅ est le méthyle, l'éthyle ou l'isopropyle.

6. Mélange de colorants selon la revendication 1, dans lequel R₁ et R₃ représentent le méthyle, R₄ représente le méthyle ou l'éthyle, R₅ le méthyle, l'éthyle ou l'isopropyle et n représente 2 ou 3.

7. Mélange de colorants selon l'une des revendications 1 à 6, caractérisé en ce que la proportion des colorants de formule (1) et (2) est située entre 3 : 1 et 1 : 3.

8. Procédé pour la préparation de mélanges de colorants selon la revendication 1, caractérisé en ce qu'on réalise une diazotation d'un composé diazoté de formule 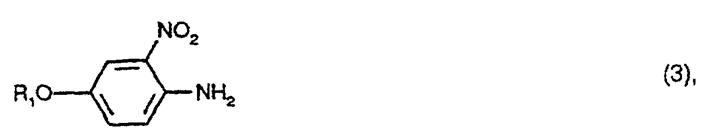 dans laquelle R₁ représente un groupe alkyle en C₁ à C₄, et en ce qu'on le copule à un mélange de deux composants de copulation des formules 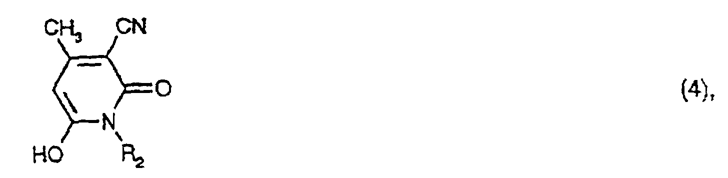 dans laquelle R₂ représente le résidu (CH₂)ₙO-R₅, R₅ un groupe alkyle en C₁ à C₄ et n un nombre 1, 2 ou 3, et 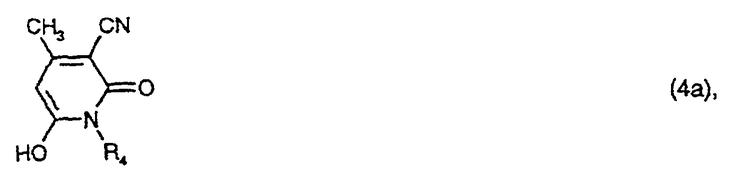 dans laquelle R₄ représente un groupe alkyle en C₁ à C₄.

9. Utilisation du mélange de colorants selon la revendication 1 pour la teinture ou l'impression de matériau fibreux semi-synthétique ou synthétique hydrophobe, en particulier de matériau textile.

10. Procédé pour la teinture ou l'impression de matériau fibreux semi-synthétique ou synthétique hydrophobe, en particulier de matériau textile, caractérisé en ce qu'on dépose le mélange de colorants selon la revendication 1 sur le matériau cité ou en ce qu'on l'introduit dans celui-ci.

11. Matériau hydrophobe teinté ou imprimé selon la revendication 10, de préférence un matériau textile en polyester.
